Europäisches Patentamt

European Patent Office

Office européen des brevets

(11) Veröffentlichungsnummer: **0 377 192**
**A1**

(12) **EUROPÄISCHE PATENTANMELDUNG**

(21) Anmeldenummer: **89123887.5**

(22) Anmeldetag: **23.12.89**

(51) Int. Cl.⁵: **A47J 31/44, A47J 31/057**

(30) Priorität: **28.12.88 DE 3844091**

(43) Veröffentlichungstag der Anmeldung:
**11.07.90 Patentblatt 90/28**

(84) Benannte Vertragsstaaten:
**AT BE CH DE ES FR GB GR IT LI LU NL SE**

(71) Anmelder: **Melitta-Werke Bentz & Sohn K.G.**
**Ringstrasse 99**
**D-4950 Minden(DE)**

(72) Erfinder: **Härtel, Georg, Ing.**
**Bornweg 4**
**D-4950 Minden / Westfalen(DE)**

(74) Vertreter: **Stracke, Alexander, Dipl.-Ing. et al**
**Jöllenbecker Strasse 164**
**D-4800 Bielefeld 1(DE)**

(54) **Kaffee- oder Teemaschine.**

(57) Eine Kaffee- oder Teemaschine mit einem Frischwasserbehälter (1),dessen Auslauf in einen Durchlauferhitzer (2) einmündet,und mit einem Wasserfilter (6) soll so gestaltet werden, daß die Integration des Wasserfilters (6) einfach und problemlos möglich ist.

Zu diesem Zweck ist an den Frischwasserbehälter (1) eine Mulde (5) angeformt, deren Kontur der Kontur eines in die Mulde (5) eingesetzten Wasserfilters (6) entspricht.

Der Wasserfilter (6) kann von der Oberseite des Frischwasserbehälters (1) aus gesehen in die Mulde (5) eingesetzt werden.

Die Konstruktion der Kaffee- oder Teemaschine im übrigen bleibt gegenüber Konstruktionen, bei denen kein Wasserfilter vorhanden ist, grundsätzlich unberührt.

# Kaffee- oder Teemaschine

Die vorliegende Erfindung betrifft eine Kaffee- oder Teemaschine mit einem Frischwasserbehälter, dessen Auslauf in einen Durchlauferhitzer einmündet, und mit einem Wasserfilter.

Um die Qualität von Aufgußgetränken aus Kaffee oder Tee zu verbessern, ist es vielfach erforderlich, das dem Wasserleitungsnetz entnommene Frischwasser zu filtern.

Man hat deshalb schon Kaffee- oder Teemaschinen der gattungsgemäßen Art mit Wasserfiltern ausgestattet.

Dabei hat die Integration eines Wasserfilters in eine Kaffee-oder Teemaschine bislang aufwendige und demzufolge auch kostspielige Konstruktionen ergeben.

Der vorliegenden Erfindung liegt die Aufgabe zugrunde, eine Kaffee- oder Teemaschine der eingangs erwähnten Art so zu gestalten, daß die Integration eines Wasserfilters in die Kaffee- oder Teemaschine einfach, kostengünstig und ohne nennenswerte Veränderungen der Technik einer derartigen Kaffee- oder Teemaschine möglich ist.

Diese Aufgabe wird erfindungsgemäß dadurch gelöst, daß der Wasserfilter im Auslaufbereich des Frischwasserbehälters in eine der Kontur des Wasserfilters angepaßte Mulde eingesetzt und über eine oder mehrere Dichtungen gegenüber den Muldenwandungen abgedichtet ist, wobei die Grundfläche des Wasserfilters und damit auch die der Mulde kleiner ist als die Grundfläche des Frischwasserbehälters.

Eine derartige Konstruktion ist einfach und problemlos zu realisieren, da gegenüber Kaffee- oder Teemaschinen ohne Wasserfilter lediglich der Auslaufbereich des Frischwasserbehälters neu zu gestalten und in diesen Bereich der Wasserfilter einzusetzen ist.

Anordnung und technischer Aufbau der übrigen Komponenten einer derartigen Kaffee- oder Teemaschine können unverändert bleiben.

Der Wasserfilter selbst kann problemlos von der Oberseite des Frischwasserbehälters her eingesetzt werden. Durch die Abdichtung des Wasserfilters gegenüber den Muldenwandungen wird sichergestellt, daß das im Frischwasserbehälter befindliche Wasser ausschließlich unter Durchtritt durch den Wasserfilter in den nachgeschalteten Durchlauferhitzer gelangen kann.

Weitere Merkmale der Erfindung sind Gegenstand von Unteransprüchen.

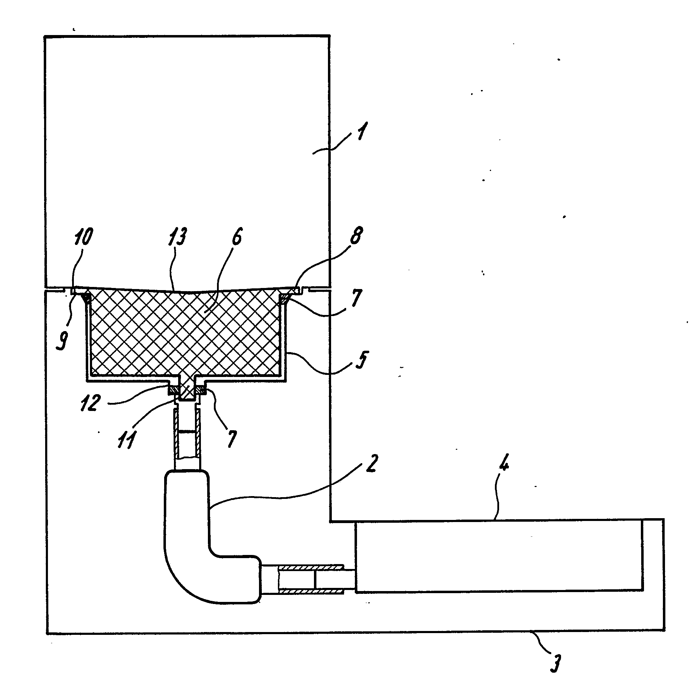

Ein Ausführungsbeispiel der Erfindung ist in der beigefügten Zeichnung dargestellt und wird im folgenden näher beschrieben.

Die einzige Figur zeigt eine stark schematisierte Darstellung einer erfindungsgemäßen Kaffee- oder Teemaschine, teilweise im Schnitt.

Mit dem Bezugszeichen 1 ist in der Zeichnung der Frischwasserbehälter einer Kaffee- oder Teemaschine bezeichnet.

An diesen Frischwasserbehälter 1 ist ein bekannter Durchlauferhitzer 2 angeschlossen und im Sockel 3 der Kaffee-oder Teemaschine ist eine Warmhalteplatte 4 integriert.

Auf die Darstellung einer Filtereinrichtung und eines Auffanggefäßes für ein mit dieser Kaffee- oder Teemaschine herstellbares Filtergetränk ist verzichtet worden, da diese Komponenten im Zusammenhang mit der vorliegenden Erfindung ohne Bedeutung sind.

Wie die Zeichnung deutlich erkennen läßt, ist im Auslaufbereich des Frischwasserbehälters 1 an diesen eine Mulde 5 angeformt, deren Kontur der Kontur eines in die Mulde 5 eingesetzten Wasserfilters 6 angepaßt ist.

Der Wasserfilter 6 ist gegenüber den Muldenwandungen durch zwei Dichtungen 7 abgedichtet.

Der Wasserfilter 1 weist an seinem dem Frischwasserbehälter 1 zugewandten oberen Endbereich einen seitlich vorstehenden, umlaufenden Rand 8 auf, der auf den Flanken 9 eines entsprechend geformten Absatzes 10 im Übergangsbereich zwischen den nutzbaren Füllraum des Frischwasserbehälters 1 und der Mulde 5 aufliegt.

An seiner dem Frischwasserbehälter 1 abgewandten Unter seite ist der Wasserfilter 1 mit einem Zapfen 11 versehen, der einen an der Unterseite der Mulde 5 angeformten Ablaufstutzen 12 durchtritt.

Wie die Zeichnung deutlich erkennen läßt, erfolgt die Abdichtung zwischen Wasserfilter 6 und Mulde 5 durch die schon erwähnten Dichtungen 7 einerseits im Bereich des umlaufenden Auflagerandes 8 und andererseits im Bereich zwischen Zapfen 11 und Ablaufstutzen 12.

Damit ist wirksam verhindert, daß in dem Frischwasserbehälter 1 befindliches Wasser unter Umgehung des Wasserfilters 6 in den Durchlauferhitzer 2 gelangen kann.

Der Wasserfilter 6 ist an seiner dem Frischwasserbehälter 1 zugewandten Oberseite mit einer kegel- oder muldenartigen Vertiefung 13 versehen, wodurch der vollständige und definierte Ablauf des im Frischwasserbehälter 1 befindlichen Wassers begünstigt wird.

Der Wasserfilter 6 weist ebenso wie die Mulde 5 eine Grundfläche auf, die kleiner ist als die des Frischwasserbehälters 1. Dadurch wird es möglich, den Wasserfilter 6 bequem von der Oberseite des Frischwasserbehälters 1 aus gesehen in die Mulde 5 einzusetzen.

Der Wasserfilter 6 ist vorteilhafter Weise auswechselbar in die Mulde 5 des Frischwasserbehälters 1 eingesetzt.

Frischwasserbehälter 1 und Mulde 5 nebst Ablaufstutzen 12 sind vorzugsweise einstückig aus Kunststoff oder aus Glas hergestellt.

Durch die vorstehend beschriebene, einfach realisierbare und für einen Benutzer leicht handhabbare Konstruktion wird ohne Veränderung der grundsätzlichen Technik von Kaffee-oder Teemaschinen, wie sie überwiegend im Haushalt verwendet werden, die Möglichkeit geschaffen, das zur Herstellung von Kaffee oder Tee benötigte Wasser zuverlässig zu filtern.

## Ansprüche

1. Kaffee- oder Teemaschine mit einem Frischwasserbehälter, dessen Auslauf in einen Durchlauferhitzer einmündet, und mit einem Wasserfilter, **dadurch gekennzeichnet,** daß der Wasserfilter (6) im Auslaufbereich des Frischwasserbehälters (1) in eine der Kontur des Wasserbehälters (6) angepaßte Mulde (5) eingesetzt und über eine oder mehrere Dichtungen (7) gegenüber den Muldenwandungen abgedichtet ist, wobei die Grundfläche des Wasserfilters (6) und damit auch die der Mulde (5) kleiner ist als die Grundfläche des Frischwasserbehälters (1).

2. Kaffee- oder Teemaschine nach Anspruch 1, dadurch gekennzeichnet, daß der Wasserfilter (6) in seinem dem Frischwasserbehälter (1) zugewandten oberen Endbereich mit einem seitlich vorstehenden, umlaufenden Auflagerand (8) versehen ist, der auf den Flanken (9) eines entsprechend geformten Absatzes (10) im Übergangsbereich zwischen dem nutzbaren Füllraum des Frischwasserbehälters (1) und der Mulde (5) aufliegt.

3. Kaffee- oder Teemaschine nach Anspruch 1 oder 2, dadurch gekennzeichnet, daß die dem Frischwasserbehälter (1) zugewandte Oberseite des Wasserfilters (6) mit einer kegel-oder muldenartigen Vertiefung (13) versehen ist.

4. Kaffee- oder Teemaschine nach einem oder mehreren der Ansprüche 1 bis 3, dadurch gekennzeichnet, daß der Wasser filter (6) an seiner dem Frischwasserbehälter (1) abgewandten Unterseite einen Zapfen (11) aufweist, der einen an der Unterseite der Mulde (5) angeformten Ablaufstutzen (12) durchtritt.

5. Kaffee- oder Teemaschine nach einem oder mehreren der Insprüche 1 bis 4, dadurch gekennzeichnet, daß der Wasserfilter (6) im Bereich seines oberen Auflagerandes (8) und im Bereich seines unteren Zapfens (11) gegenüber der einstückig an den Frischwasserbehälter (1) angeformten Mulde (5) abgedichtet ist.

6. Kaffee- oder Teemaschine nach einem oder mehreren der Ansprüche 1 bis 5, dadurch gekennzeichnet, daß der Wasserfilter (6) auswechselbar in die Mulde (5) des Frischwasserbehälters (1) eingesetzt ist.

Melitta

Europäisches Patentamt

**EUROPÄISCHER RECHERCHENBERICHT**

Nummer der Anmeldung

EP 89 12 3887

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-3 014 493 (EMIDE METALLINDUSTRIE GEBR. STREICHER) * Ansprüche 1,2,13,15; Seite 13, Zeile 1 - Seite 14, Zeile 13; Figuren 1,2,4 * | 1,4-6 | A 47 J 31/44 A 47 J 31/057 |
| Y | | 2 | |
| A | | 3 | |
| | --- | | |
| Y | DE-A-3 235 328 (FREIWALD) * Seite 6, Zeilen 7-13; Figur 5 * | 2 | |
| | --- | | |
| A | FR-A-2 188 987 (SEB) * Seite 7, Zeilen 23-30; Figur 3 * | 1,2 | |
| | --- | | |
| A | DE-U-8 214 035 (GEBRÜDER WAGSCHAL GmbH & CO. KG FEINMECHANIK, FEINOPTIK, MEDIZINTECHNIK) * Seite 5, Zeile 6 - Seite 6, Zeile 17; Figuren 1,2 * | 1,6 | |
| | --- | | |
| A | DE-A-2 256 527 (WEBER) * Seite 7, Zeile 19 - Seite 8, Zeile 24; Figuren 5,16 * | 1,2,5,6 | RECHERCHIERTE SACHGEBIETE (Int. Cl.5) |
| | --- | | |
| A | US-A-4 119 019 (REID) * Seite 2, Spalte 1, Zeile 65 - Seite 3, Spalte 1, Zeile 18; Figuren 2-4 * | 1,5,6 | A 47 J |
| | --- | | |
| A | EP-A-0 107 809 (FIBEG BETEILIGUNGSGESELLSCHAFT GmbH) ----- | | |

Der vorliegende Recherchenbericht wurde für alle Patentansprüche erstellt

| Recherchenort | Abschlußdatum der Recherche | Prüfer |
|---|---|---|
| DEN HAAG | 03-04-1990 | BODART P.A. |